# FASCICULE DE BREVET EUROPEEN

(11) **EP 3 746 967 B1**
(45) Date de publication et mention de la délivrance du brevet: **30.08.2023**
(21) Numéro de dépôt: 19710026.6
(22) Date de dépôt: 30.01.2019
(51) Int. Cl.: G06Q 20/20, G07G 1/00

(54) **MÉTHODES ET SYSTÈMES D'ASSISTANCE A L'ACHAT EN UN POINT DE VENTE PHYSIQUE**
METHODEN UND SYSTEME ZUR UNTERSTÜTZUNG AN EINEM PHYSISCHEN VERKAUFSPUNKT
METHODS AND SYSTEMS OF PURCHASING ASSISTANCE AT A PHYSICAL POINT OF SALE

(30) Priorité: 31.01.2018 FR 1850812
(43) Date de publication de la demande: 09.12.2020
(73) Titulaire: Mo-ka, 75018 Paris (FR)
(72) Inventeur: AFRAITE-SEUGNET, Mehdi, 75018 Paris (FR)
(74) Mandataire: Nasr, Abdelmottaleb
(86) Numéro de dépôt international: PCT/FR2019/050213
(87) Numéro de publication internationale: WO 2019/150047

(56) Documents cités:
- WO-A1-93/04449
- FR-A1- 2 727 836
- KR-A- 20110 126 235
- US-A- 5 488 202
- US-A1- 2002 170 961
- US-A1- 2009 140 850
- US-A1- 2012 284 132
- US-A1- 2015 206 121
- US-A1- 2018 082 279
- US-B1- 6 435 407
- ANONYMOUS: "Grocery Buggy", IBM TECHNICAL DISCLOSURE BULLETIN, INTERNATIONAL BUSINESS MACHINES CORP. (THORNWOOD), US, vol. 6, no. 31, 1 novembre 1988 (1988-11-01), pages 399-400, XP002013065, ISSN: 0018-8689

## Description

L'invention a trait au domaine technique des méthodes et systèmes d'amélioration de l'expérience d'achat dans le commerce de détail, et plus particulièrement aux méthodes et systèmes d'assistance à l'achat dans un point de vente au détail en libre-service.

On entend ici par « point de vente au détail en libre-service » tout lieu de vente physique où des clients peuvent librement circuler parmi les rayons et prélever eux-mêmes les articles proposés à la vente.

Dans de tels points de vente, un client pourvu d'un contenant portatif tel que par exemple un panier ou un sac de magasinage, mis à disposition par le point de vente ou appartenant au client, prélève des articles et dépose des articles dans le contenant, au fur et à mesure qu'il se déplace dans le point de vente.

A la fin de son parcours, le client se rend à la caisse, généralement située à la sortie du point de vente, pour payer les articles.

Une fois le paiement effectué, la propriété des articles est transférée au client, complétant ainsi la transaction d'achat.

Le développement du commerce électronique est vu comme permettant un gain de temps. Il en résulte que les clients qui se rendent encore dans un magasin physique tolèrent de moins en moins d'y passer beaucoup de temps.

Il a ainsi été proposé récemment par la société Amazon un magasin d'alimentation sans passage en caisse ni borne de paiement, des caméras et capteurs détectant les produits qui sont retirés des rayons ou qui y sont remis par le client, et en conservant la trace dans un panier virtuel. Le client, à son entrée dans le magasin, doit scanner une application sur son terminal mobile, permettant d'identifier le client et de prélever l'argent sur un compte Amazon, à la sortie du client. La technologie utilisée permet d'observer les habitudes et comportements des acheteurs, supprime les files d'attente en caisse. Mais cette technologie nécessite des milliers de capteurs et de caméras situés au plafond du magasin, et sa mise en oeuvre, couteuse et complexe, n'a été proposée que dans un unique point de vente.

Dans les points de vente actuels et conventionnels, outre l'éventuelle file d'attente pour atteindre une caisse ou une borne de paiement, le client est contraint de vider son panier des articles qui y sont déposés pour les y remettre (ou les placer dans des sacs), une fois ces articles pris en compte par la caisse ou la borne.

Autrement dit, lors d'un achat en un point de vente en libre-service, le client dépose, lors de son activité de chalandage (ou shopping), les articles qu'il souhaite acheter dans un panier et, lors de son passage en caisse, doit :
- en cas d'affluence, attendre son tour ;
- décharger le panier de tous les articles qui y ont été déposés ;
- attendre qu'une opératrice de caisse ou une borne de paiement enregistre un à un ces articles et valide le paiement ; et
- recharger de nouveau les articles payés dans ce même panier ou un autre.

Ces étapes entrainent une perte de temps non souhaitée par le client, qui s'accompagne souvent d'une distorsion de perception temporelle. En effet, même s'il peut objectivement être court, le temps vécu est souvent perçu par le client comme bien supérieur au temps réellement passé, ce qui impacte en conséquence les performances du point de vente.

Afin d'améliorer les performances d'un point de vente en libre-service, des solutions visant l'amélioration de l'expérience d'achat des clients ont été proposées, notamment en réduisant le temps passé aux caisses.

Dans une première solution connue sous le nom de « self-scanning », le client est invité à enregistrer lui-même ses achats à l'aide d'un lecteur de code-barres mis à sa disposition à l'entrée du point de vente. Le client, muni de ce lecteur, enregistre (scanne) les articles qu'il dépose dans le panier au fur et à mesure de son déplacement parmi les rayons du point de vente. Lors de son passage en caisse, l'opératrice n'a plus qu'à charger les informations du lecteur, et superviser le paiement. Le passage en caisse du client se trouve ainsi relativement facilité.

Une autre solution, connue sous le nom de «self-check-out» ou «caisse automatique», consiste à faire faire par le client le travail de l'opératrice de caisse. Arrivé devant un dispositif de caisse, le client vide son panier et enregistre lui-même un à un les articles tout en suivant attentivement des instructions qui lui sont destinées. Le client règle, ensuite, la transaction d'achat et récupère ses articles.

Dans une autre solution, des étiquettes d'identification par radiofréquence (puces RFID) sont intégrées aux articles proposés à la vente, de sorte à rendre possible l'identification simultanée de l'ensemble des articles déposés dans le panier du client. Lorsque le client se présente à la caisse pour régler ses achats, un lecteur RFID lit les puces RFID intégrées aux différents articles, sans besoin de les ressortir du panier du client, permettant de la sorte une accélération du passage en caisse.

Toutefois, les solutions connues ne sont pas exemptes d'inconvénients, tant pour le client que pour le point de vente.

Les méthodes de "self-scanning" ou de "self-check-out", basées sur une contribution/collaboration dirigée de la part du client, nécessitent une acceptation à la fois technique et sociale de l'outil mis à sa disposition.

Un manque de familiarité avec ces outils ou le refus d'exercer un effort supplémentaire pour se les approprier constituent des freins à leurs adoptions par les clients.

En outre, pour aboutir à une co-production réussie, il faut que le client comprenne clairement ce que l'on attend de lui, qu'il soit motivé à adopter le comportement attendu de lui, et qu'il ait les compétences requises pour remplir les tâches qui lui sont imparties.

L'usage des outils mis à disposition demande, pour certains clients, un effort intellectuel supplémentaire auquel ils ne sont pas nécessairement disposés.

Pour un self-scanning, le client doit se rappeler d'enregistrer chaque article qu'il dépose dans son panier.

Il arrive cependant souvent que le client se demande s'il a enregistré, voire s'il a enregistré deux fois un article qu'il vient de déposer dans le panier, engendrant un moment de doute et une perte de temps indésirables.

Par ailleurs, ces méthodes basées sur l'implication du client ont pour effet de qualifier le client de "client exécutant" et peuvent, de ce fait, être destructrices de valeur pour le client.

En effet, en enregistrant lui-même les articles, que ce soit dans un self-scanning ou un self-check-out, un client peut avoir l'impression de réaliser des tâches à la place du personnel du point de vente (et donc travailler pour le compte du point de vente, sans qu'il n'y trouve son compte). Ceci peut être mal perçu par le client et entraver, par conséquent, son expérience d'achat.

L'expérience d'achat du client se trouve aussi altérée par l'aspect machinal, qu'il est contraint de subir, de l'enregistrement un à un des articles.

La solution basée sur l'utilisation d'étiquettes d'identification par radiofréquences (puces RFID) est coûteuse, car elle nécessite la configuration et l'intégration d'une puce RFID à tous les articles proposés à la vente.

Pour certains produits, le coût d'intégration d'une puce RFID peut facilement rendre leurs prix prohibitifs par rapport à ce qui est attendu par le client.

De plus, ce choix ne peut, en réalité, être envisageable que pour des points de vente qui interviennent dans la chaine de production des articles qu'ils proposent à la vente.

Une telle solution ne peut donc être à la portée de tout point de vente proposant à la vente des articles de différentes catégories et/ou provenant de différents fabricants.

Cette dernière solution pose également problème pour l'obtention d'une comptabilité précise du contenu entier d'un panier, c'est-à-dire la possibilité d'identifier avec précision l'ensemble des articles déposés dans ce panier.

Il arrive, en effet, qu'une puce RFID d'un article disposé au centre du panier, notamment masqué par un ou plusieurs autres articles (constituant un isolant anti-ondes radio), ne puisse communiquer avec le lecteur/scanner RFID, de sorte que l'article en question ne peut être identifié avec exactitude, voire ne puisse tout simplement pas être détecté.

Une numérisation partielle d'un panier se traduit par une perte pour le point de vente.

Le document WO2016/135142 (Heinrich) décrit un chariot libre-service à roulettes intégrant des capteurs dont les données captées sont utilisées en vue d'une identification automatique d'un article déposé par le client dans le chariot libre-service à roulettes.

Néanmoins, cette solution ne va pas sans inconvénients.

Pour le point de vente, les chariots libre-service sont, à cause de leurs volumes, le plus souvent emboitables et disposés à l'extérieur du point de vente (parking, au voisinage de l'entrée du point de vente, ou à la sortie du point de vente). Les capteurs qui y sont installés peuvent être, ainsi, facilement endommagés lors de l'emboitement des chariots libre-service. De plus, en étant hors contrôle du point de vente et accessibles aux utilisateurs à l'extérieur du point de vente, les capteurs peuvent être la cible de tentatives de modifications ou d'endommagement. Par ailleurs, un chariot libre-service à roulettes est souvent susceptible de subir des chocs qui pourraient altérer le bon fonctionnement des capteurs.

En outre, en fonction du besoin du client (par exemple, moins d'une dizaine d'articles) et/ou de l'offre ou de l'espace du point de vente (produits de petite taille, produits de luxe, espace insuffisant pour se déplacer avec un chariot libre-service, présence d'obstacles ou d'escaliers empêchant l'utilisation d'un chariot à roulettes), un chariot libre-service à roulettes peut ne pas convenir pour réaliser des achats dans ce point de vente.

De plus, pour bénéficier des avantages du système décrit dans le document WO2016/135142, le client est contraint d'utiliser ce chariot libre-service à roulettes. Un client pourvu d'un sac de magasinage inadapté à cette solution s'en trouve privé.

Au surplus, le chariot libre-service à roulettes est, le plus souvent, mis à disposition par le point de vente, de sorte que le client doit, à la fin de l'opération de l'achat, récupérer ses articles et rendre le chariot libre-service utilisé au point de vente. Cette solution, même si elle peut accélérer le passage en caisse du client, ne lui fait pas gagner le temps requis pour récupérer depuis ce chariot libre-service les articles qu'y sont déjà déposés.

Le document US2009/140850 A1 divulgue un dispositif d'assistance à l'achat attaché à un contenant qui détecte le mouvement d'articles dans le contenant afin de vérifier si les articles ont été scannés par un lecteur RFID et de détecter le contenu dûment enregistré du contenant. Le mouvement propre du contenant est également détecté.

Un objet de la présente invention est de remédier aux inconvénients précités.

Un autre objet de la présente invention est de proposer une solution d'assistance à l'achat sollicitant moins de sacrifices de la part du client.

Un autre objet de la présente invention est d'améliorer l'expérience d'achat en un point de vente au détail en libre-service, en réduisant au mieux le temps passé perçu par le client.

Un autre objet de la présente invention est d'améliorer l'expérience d'achat en un point de vente physique en libre-service, en réduisant le temps requis pour l'enregistrement des articles en caisse.

Un autre objet de la présente invention est de favoriser les activités de chalandage (ou shopping).

Un objet de la présente invention est de proposer un système permettant de tenir une liste actualisée des articles compris dans le panier du client, au fur et à mesure qu'il réalise son achat en un point de vente en libre-service.

Un autre objet de la présente invention est de proposer des méthodes et système permettant de fluidifier et accélérer le passage en caisses.

Un autre objet de la présente invention est de proposer un dispositif pour l'assistance à l'achat, dans un point de vente en libre-service, d'un client équipé de son propre panier/sac de magasinage ou d'un contenant portatif mis à sa disposition par le point de vente.

Un autre objet de la présente invention est de proposer un système d'assistance à l'achat d'un client équipé de tout type de contenant portatif, notamment un contenant portatif qui lui appartient et pratiquement sans aucune restriction sur sa forme.

Un autre objet de la présente invention est de promouvoir l'utilisation des technologies connectées et digitales en magasins (le smart-shopping), à l'effet d'améliorer l'expérience d'achat dans les points de vente physique.

A cet effet, il est proposé, en premier lieu, un système selon la revendication 1.

Diverses caractéristiques supplémentaires peuvent être prévues, seules ou en combinaison :
- la liste réduite d'articles est déterminée en fonction de la position actuelle et/ou une position antérieure du dispositif d'assistance à l'achat ;
- la partie centrale du dispositif d'assistance à l'achat comprend un capteur d'image ;
- le dispositif d'assistance à l'achat comprend, en outre, un capteur de poids, configuré pour mesurer, lorsque le dispositif est utilisé pour porter le contenant portatif, une variation dans le poids du contenant portatif, les moyens de traitement utilisant, en outre, cette variation pour estimer ledit article compris dans ladite au moins une image ;
- le dispositif d'assistance à l'achat comprend, en outre, au moins un capteur de distance configuré pour mesurer sans contact, lorsque le dispositif est utilisé pour porter le contenant portatif, une distance entre ce capteur de distance et un article compris au moins partiellement dans le champ de mesure de ce capteur de distance ;
- les bras de suspension comprennent des moyens de rétention, destinés à maintenir ce contenant portatif ouvert, lorsque ledit dispositif est utilisé pour porter le contenant portatif ;
- les moyens de rétention comprennent un capteur de contact, configuré pour capter l'utilisation dudit dispositif pour porter un contenant portatif ;
- le dispositif comprend un lecteur de carte, configuré pour lire depuis une carte physique ou virtuelle un identifiant client, les moyens de traitement étant configurés pour associer ledit dispositif audit identifiant client.

Il est proposé, en deuxième lieu, un ensemble selon la revendication 9. Le contenant portatif est, dans certains modes de réalisation, en matière déformable.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 illustre schématiquement un point de vente, permettant la mise en oeuvre de divers modes de réalisation ;
- les figures 2-5 illustrent schématiquement une représentation fonctionnelle non limitative d'un dispositif d'assistance à l'achat selon divers modes de réalisation ;
- la figure 6 illustre schématiquement des composants compris dans un dispositif d'assistance à l'achat, selon divers modes de réalisation ;
- la figure 7 est un diagramme schématique d'un procédé d'assistance à l'achat d'un client dans un point de vente.

On entend ici par « point de vente au détail en libre-service » tout point de vente physique, qu'il soit spécialisé ou non dans une catégorie de produits, dans lequel un client peut se déplacer librement et y prélever lui-même des articles proposés à la vente.

Le point de vente est par exemple une boutique, un bazar, un magasin spécialisé, un magasin de grande surface, un supermarché ou encore un hypermarché.

A titre d'exemples non limitatifs de points de vente au détail en libre-service, on cite un magasin spécialisé en produits de beauté, une parapharmacie, un magasin « duty-free », une épicerie, une librairie, un magasin de grande surface alimentaire, une supérette, une grande surface de bricolage, un supermarché ou un hypermarché d'une enseigne de la grande distribution alimentaire.

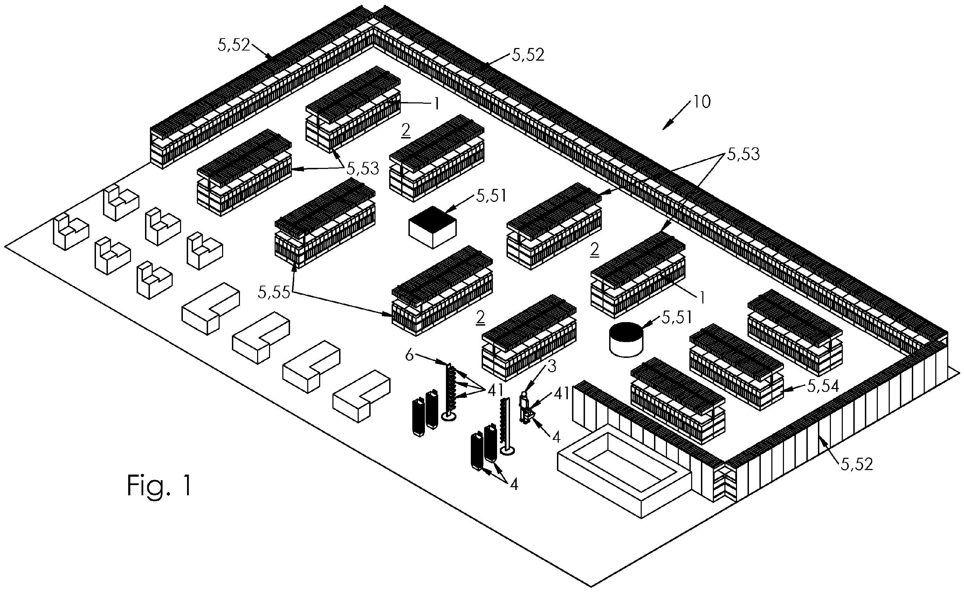

Dans de tels points de vente, illustrés par la figure 1, les articles **1** sont proposés à la vente dans des rayons **2** parmi lesquels un client **3,** muni d'un contenant portatif **4,** peut se déplacer librement et composer, au fur et à mesure de son déplacement, son panier d'achat sans médiation du personnel du point de vente **10.**

Les rayons **2** du point de vente **10** sont le plus souvent formés par des gondoles de magasin ou, plus généralement, par des supports **5** (présentoirs, plateau d'exposition, stand, étagère, palette ou analogue) configurés pour supporter ou contenir (dans le cas de gondoles de magasin réfrigérées) les articles **1** proposés à la vente.

Ces gondoles de magasin peuvent être de diverses formes, telles que des gondoles îlots **51,** et/ou des gondoles murales **52,** et/ou des gondoles centrales **53,** et/ou des gondoles racks **54.**

Des têtes de gondoles **55** peuvent également être disposées au bout des allées des gondoles centrales **53.**

Les articles **1** sont généralement posés sur les tablettes des gondoles de magasin, ou accrochés à des broches, des barres ou des bras montés sur des gondoles de magasin ou sur tout autre support **5.**

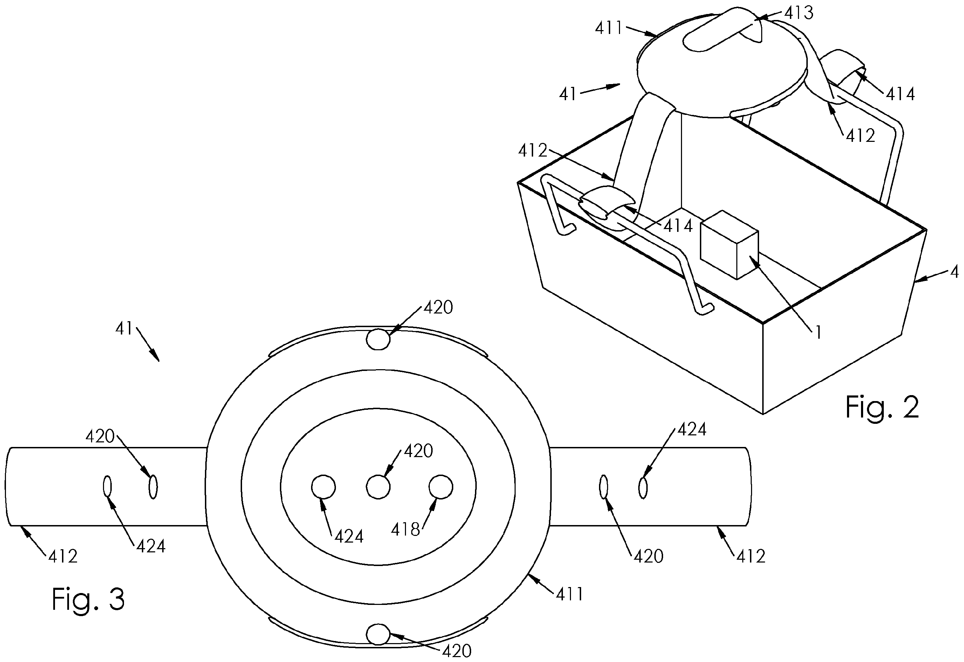

En se référant aux figures 2-5, le contenant portatif **4** est porté par le client **3** au moyen d'un dispositif **41** d'assistance à l'achat, configuré pour assister le client **3** dans la réalisation d'un achat dans le point de vente **10.**

Dans certains modes de réalisation, le dispositif **41** d'assistance à l'achat fait partie intégrante du contenant portatif **4.**

Dans d'autres modes de réalisation, le dispositif **41** d'assistance à l'achat est couplé de façon amovible au contenant portatif **4.** Autrement dit, le dispositif **41** d'assistance à l'achat est séparable du contenant portatif **4** et peut y être monté et démonté.

Le dispositif **41** d'assistance à l'achat et le contenant portatif **4** sont, dans certains modes de réalisation, mis à disposition du client **3** d'une manière séparée ou assemblée, par exemple à l'entrée du point de vente **10** ou à tout autre endroit du point de vente **10.**

Le contenant portatif **4** est, par exemple, un panier à poignées par lesquelles il peut être saisi et porté commodément, avec ou sans le dispositif **41** d'assistance à l'achat.

Plus généralement, le contenant portatif **4** est tout récipient/conteneur/panier/sac comprenant des points de fixation (tels que des points d'attaches, des lumières, des fentes, des éléments d'ancrage, des poignées), par lesquels il est apte à recevoir le dispositif **41** d'assistance à l'achat pour être porté commodément par l'intermédiaire de ce dispositif **41** d'assistance à l'achat par le client **3.**

Le contenant portatif **4** peut être en une ou plusieurs matières rigides, semi-rigides ou déformables.

Par exemple, le contenant portatif **4** est un panier à poignées en matériau polymère ou en fil métallique, un sac de magasinage en tissu (par exemple en nylon ou en coton), un sac en papier kraft.

Le contenant portatif **4** peut être mis à disposition du client **3** par le point de vente **10,** proposé à la vente par le point de vente **10,** ou être apporté par le client **3.**

Dans certains modes de réalisation et pour ne pas encombrer l'espace du point de vente **10,** le contenant portatif **4** est, lorsqu'il est séparé du dispositif **41** d'assistance à l'achat, pliable et/ou emboitable/empilable.

Le contenant portatif comprend une ouverture, donnant accès à l'intérieur de ce contenant portatif **4.** Cette ouverture permet au client **3** d'y déposer ou d'y retirer un article **1.** Il s'agit, le plus souvent, d'une ouverture principale, opposée au fond du contenant portatif **4.**

Lorsque le client **3** porte le contenant portatif **4** par l'intermédiaire du dispositif **41** d'assistance à l'achat, ce dispositif **41** d'assistance à l'achat se trouve au-dessus du contenant portatif **4.**

En d'autres termes, le dispositif **41** d'assistance à l'achat se trouve en surplomb de l'ouverture du contenant portatif **4.**

Le dispositif **41** d'assistance à l'achat est ainsi en regard de (ou fait face à) l'ouverture du contenant portatif **4.**

L'intérieur du contenant portatif **4** demeure facilement accessible pour le client **3,** depuis l'espace de part et d'autre du dispositif **41** d'assistance à l'achat.

Le dispositif **41** d'assistance à l'achat est, dans certains modes de réalisation, sous forme d'anse ou analogue.

Dans certains modes de réalisation, le dispositif **41** d'assistance à l'achat est monté pivotant sur le contenant portatif **4** avec ou sans système de blocage à la verticale.

En alternative, lorsqu'il fait partie intégrante du contenant portatif **4** (c.à.d., lorsqu'il forme une pièce unique avec le contenant portatif **4)** ou lorsqu'il y est monté, le dispositif **41** d'assistance à l'achat est maintenue à la verticale en regard de l'ouverture du contenant portatif **4,** de sorte à diviser l'espace d'accès à l'intérieur de ce contenant portatif **4** en des sous-espaces sensiblement identiques.

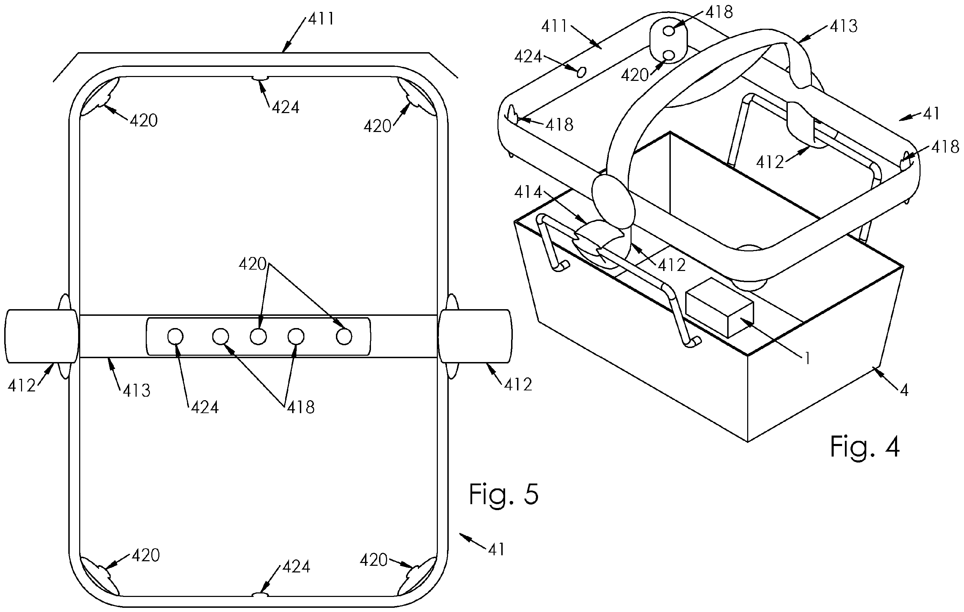

Dans l'exemple des figures 2 et 4, le dispositif **41** d'assistance à l'achat sépare l'ouverture permettant l'accès à l'intérieur du contenant portatif **4** en deux sous-espaces sensiblement identiques.

Le dispositif **41** d'assistance à l'achat comprend une partie centrale **411,** des bras de suspension **412** liés à la partie centrale **411** et s'étendant de part et d'autre de cette partie centrale **411,** et une poignée **413** liée à la partie centrale **411.**

Dans les exemples des figures 2-5, le dispositif **41** d'assistance à l'achat comprend deux bras de suspension **412** qui s'étendent à partir de deux faces latérales opposées de la partie centrale **411.**

Dans un autre mode de réalisation (non représenté), le dispositif **41** d'assistance à l'achat comprend trois, quatre ou plus de quatre bras de suspension **412.**

Les bras de suspension **412** sont, dans certains modes de réalisation, sensiblement identiques et uniformément répartis autour de la partie centrale **411.**

Les bras de suspension **412** ont pour fonction de maintenir le contenant portatif **4** ouvert, de sorte à pouvoir observer son contenu ou son intérieur, notamment lorsque ce dernier est facilement déformable (un sac en plastique, en tissu, ou en kraft, par exemples).

Dans certains modes de réalisation, les bras de suspension **412** sont télescopiques, et/ou suffisamment rigides de sorte que le contenant portatif **4** puisse être maintenu ouvert tant qu'il est porté par l'intermédiaire du dispositif **41** d'assistance à l'achat à l'effet de pouvoir observer son intérieur.

Grâce aux bras de suspension **412,** le dispositif **41** d'assistance à l'achat maintient et tient en écart les poignées du contenant portatif **4.** Pour cela, chaque bras de suspension **412** comprend, dans sa partie distale, un moyen de rétention **414.**

Les moyens de rétention **414** permettent de retenir les poignées du contenant portatif **4** écartées et, par conséquent, de maintenir ce contenant portatif **4** ouvert, à l'effet de pouvoir observer son contenu.

Le moyen de rétention **414** comprend, dans certains modes de réalisation, un anneau refermable. L'anneau refermable comprend des extrémités aimantées, afin de pouvoir se refermer autour des poignées du contenant portatif **4** et faciliter le retrait du dispositif **41** d'assistance à l'achat.

La poignée **413** du dispositif **41** d'assistance à l'achat est configurée pour permettre la prise en main confortable du contenant portatif **4** d'une seule main. Dans certains modes de réalisation (non illustré dans les figures), la poignée **413** est montée pivotante sur la partie centrale **411.** Pour cela, un col s'étendant à partir de la partie centrale **411** relie la poignée **413** à cette partie centrale **411.** Le col peut, dans certains modes de réalisation, s'allonger de manière télescopique ou sous la forme d'une tige crantée.

La partie centrale **411,** faisant face à l'intérieur du contenant portatif **4** porté au moyen du dispositif **41** d'assistance à l'achat, comprend une unité de traitement **415** reliée à une pluralité de capteurs et à au moins une interface de communications sans fil compris dans le dispositif **41** d'assistance à l'achat.

Ces moyens visent à permettre l'identification des articles **1** compris dans le contenant portatif **4** porté par le client **3.**

Par unité de traitement **415,** on entend ici toute entité physique (du type comprenant un processeur, une mémoire, des bus informatiques et divers composants électroniques servant de support pour l'exécution de programmes informatiques), capable d'acquérir des données et intégrer des fonctionnalités permettant la mise en oeuvre d'un procédé de traitement de données.

Dans certains modes de réalisation, le dispositif **41** d'assistance à l'achat comprend une première interface de communications sans fil **416** permettant la communication, directement ou indirectement, entre l'unité de traitement **415** et un serveur local ou distant, tel qu'un serveur de traitement, et/ou un serveur d'encaissement, et/ou un serveur de comptes clients, et/ou un serveur de notification « Push », et/ou un serveur de messagerie. Cette première interface de communication sans fil **416** est, par exemple, une interface WiFi^{®}, une interface WiMax^{®}, ou une interface réseau universel évolué d'accès radio terrestre (tel que le 3G, 4G ou 5G par exemples).

Cette première interface de communications sans fil **416** permet, dans certains modes de réalisation, la communication via un réseau local entre l'unité de traitement **415** et une pluralité de points d'accès répartis au sein du point de vente **10.** Les points d'accès sont disséminés dans le point de vente **10** suivant un maillage prédéfini (par étage, par rayon, ou par zone par exemples). Chacun de ces points d'accès est relié à un ou plusieurs serveurs distants et route les communications issues de l'unité de traitement **415** vers le ou les serveurs distants/locaux appropriés, en fonction du contenu de la communication, de la position du dispositif **41** d'assistance à l'achat dans le point de vente **10,** ou de la disponibilité du serveur destinataire.

En variante ou en combinaison, le dispositif **41** d'assistance à l'achat comprend une deuxième interface de communications sans fil **417** permettant la communication entre l'unité de traitement **415** et un terminal utilisateur (un Smartphone, une tablette, ou une phablette par exemples), des objets connectés ou des balises déployées suivant un maillage prédéfini dans le point de vente **10.** Cette deuxième interface de communication sans fil **417** est, par exemple, une interface Bluetooth^{®}, une interface HomeRF^{®}, une interface ZigBee, ou une interface Infra-rouge (IR).

Le dispositif **41** d'assistance à l'achat comprend un capteur de mouvement **418.** Ce capteur de mouvement **418** est configuré pour détecter tout mouvement tendant à poser ou à retirer un article **1** dans/depuis le contenant portatif **4** (par exemple, toute intrusion dans l'intérieur du contenant portatif **4**).

Dans certains modes de réalisation, une pluralité de capteurs de mouvement **418** sont disposés dans le dispositif **41** d'assistance à l'achat, de sorte à couvrir ensemble l'ouverture du contenant portatif **4.**

A titre d'exemple, une pluralité de capteurs de mouvement **418** infra-rouge sont disposés sur la face inférieure (dans le cas de la figure 2) et/ou la face intérieure (dans le cas de la figure 4) de la partie centrale **411** du dispositif **41** d'assistance à l'achat. Ces capteurs de mouvement **418** sont orientés de sorte que leurs champs de vision couvrent ensemble, au moins partiellement, l'ouverture et/ou l'intérieur du contenant portatif **4.**

Le capteur de mouvement **418** informe l'unité de traitement **415** de toute détection de mouvement à travers l'ouverture du contenant portatif **4.**

Le dispositif **41** d'assistance à l'achat comprend avantageusement un capteur de poids **419** (ou un capteur de pesage), au moyen duquel l'unité de traitement **415** peut détecter tout changement/variation dans le poids du contenant portatif **4** porté par le client **3.** L'unité de traitement **415** peut, ainsi, évaluer cette variation. Une variation du poids peut être causée par le dépôt ou le retrait d'un article **1** dans le contenant portatif **4.** L'unité de traitement **415** possède, ainsi, une estimation du poids d'un article **1** qui vient d'être posé dans ou retiré depuis le contenant portatif **4.** La sensibilité du capteur de poids **419** peut être choisie en fonction du poids le plus faible des articles **1** proposés à la vente et/ou en fonction des différences entre les poids des différents articles **1** proposés à la vente. Dans certains modes de réalisation, le capteur de poids **419** relève/capte le poids actuel du contenant portatif **4** en continu, à une fréquence prédéfinie, ou sur demande de l'unité de traitement **415.**

Les variations dans le poids du contenant portatif **4,** relevées par le capteur de poids **419,** sont connues en permanence par l'unité de traitement **415** qui, dans certains modes de réalisation, les mémorise dans une mémoire tampon de taille prédéfinie.

Le capteur de poids **419** est, dans certains modes réalisation, compris dans la poignée **413** ou dans les bras de suspension **412** du dispositif **41** d'assistance à l'achat.

L'unité de traitement **415** peut demander au capteur de poids **419** un relevé de poids continu ou discret pendant un temps prédéfini corrélé à la détection de mouvement par le capteur de poids **418.**

En variante, le capteur de poids **419** communique à une fréquence prédéfinie les mesures qu'il effectue. Ces mesures sont mémorisées dans une mémoire tampon et horodatées par l'unité de traitement **415.** Il en résulte qu'à la détection d'un mouvement renseigné par le capteur de mouvement **418,** l'unité de traitement **415** peut observer la variation dans les mesures de poids qui lui sont fournies par le capteur de poids **419.**

Le dispositif **41** d'assistance à l'achat comprend un ou plusieurs capteurs d'image **420** (ou capteurs visuels).

Chacun des capteurs d'image **420** est destiné à acquérir des images fixes ou vidéos, intégrant au moins partiellement l'ouverture du contenant portatif **4.** Lorsque le contenant portatif **4** est porté au moyen du dispositif **41** d'assistance à l'achat, les capteurs d'image permettent de capter une image d'un article **1** au niveau de l'ouverture et/ou à l'intérieur du contenant portatif **4.**

Pour cela, la partie centrale **411** du dispositif **41** d'assistance à l'achat comprend avantageusement, tel qu'il est illustré par les figures 2-5, un capteur d'image **420** central. Ce capteur d'image **420** central est compris au centre de la face intérieure de la partie centrale **411,** de sorte que le champ de vue de capteur d'image **420** central comprend l'intérieur du contenant portatif **4.** Le capteur d'image **420** central permet ainsi d'obtenir une image de l'intérieur du contenant portatif **4.**

Le dispositif **41** d'assistance à l'achat comprend aussi avantageusement des capteurs d'image **420** latéraux installés de part et d'autre du capteur d'image **420** central. Chacun des capteurs d'image **420** latéraux permet d'obtenir une image d'au moins le demi-espace correspondant de l'ouverture du contenant portatif **4.**

Dans certains modes de réalisation, lorsque le contenant portatif **4** est porté par l'intermédiaire du dispositif **41** d'assistance à l'achat, le capteur d'image **420** central est orienté (ou dirigé) vers l'intérieur du contenant portatif **4** et les capteurs d'image latéraux sont orientés vers au moins une partie du contour de l'ouverture du contenant portatif **4.**

Dans certains modes de réalisation, le dispositif **41** d'assistance à l'achat comprend une pluralité de capteurs d'image **420** latéraux, de préférence uniformément répartis sur la face intérieure de la partie centrale **411,** et/ou disposés sur la face en regard de l'intérieur du contenant portatif **4** des bras de suspension **412.**

Dans certains modes de réalisation, le contour de l'ouverture du contenant portatif **4** est couvert par la combinaison des champs de vue des capteurs d'image **420.**

L'acquisition des images par le capteur d'image **420** vise la reconnaissance visuelle du ou des articles **1** éventuellement compris dans les images acquises. L'acquisition d'images depuis plusieurs capteurs d'image **420** permet d'avoir des images de plus d'un côté ou d'une vue de l'article **1** (images prises sous plusieurs angles de vue), et faciliter donc la reconnaissance de l'article **1.**

Plus généralement, le capteur d'image **420** est avantageusement tout capteur permettant de capter des données d'image exploitables par l'unité de traitement **415** tel qu'un appareil photo ou une caméra numérique, des caméras 2D/3D, des caméras 3D à détection de profondeur, ou un capteur d'image stéréoscopique. Le capteur d'image **420** peut comprendre une lentille omnidirectionnelle, une lentille grand angle, une lentille fish-eye ou analogues. En outre, la lentille peut comprendre des surfaces réfléchissantes, telles que des miroirs plans, paraboliques ou coniques, qui peuvent être utilisées pour fournir un champ de vision relativement grand ou des points de vue multiples, de sorte à couvrir au mieux l'intérieur du contenant portatif **4** et l'espace permettant l'accès à son intérieur.

Dans certains modes de réalisation, les capteurs d'image **420** sont agencés de sorte à fournir des données volumétriques, notamment une métrique de profondeur, permettant d'évaluer une ou plusieurs dimensions d'un article **1** présent dans les images acquises.

Dans certains modes de réalisation, le capteur d'image **420** est couplé à un dispositif d'éclairage pour éclairer, si nécessaire, la scène (notamment, l'intérieur du contenant portatif **4)** vers laquelle est orienté le capteur d'image **420.**

La capture d'images peut être ordonnée, par l'unité de traitement **415,** d'une manière sélective, c.à.d. uniquement à des capteurs d'image **420** spécifiques et non pas à l'ensemble des capteurs d'image **420.** Par exemple, seuls les capteurs d'image **420** dont les champs de vue chevauchent celle d'un capteur de mouvement **418** origine d'une détection de mouvement captent une ou plusieurs images, sur demande de l'unité de traitement **415** ou d'une manière couplée audit capteur de mouvement **418.**

Dans certains modes de réalisation, le capteur de mouvement **418** est couplé à un ou plusieurs capteurs d'image **420,** de sorte que la détection d'un mouvement à travers une partie de l'ouverture du contenant portatif **4** déclenche automatiquement la capture d'une ou de plusieurs images par le(s) capteur(s) d'image couvrant cette partie de l'ouverture.

Par exemple, deux capteurs de mouvement **418** infra-rouge orientés vers l'intérieur et/ou les bords de l'ouverture du contenant portatif **4** déclenchent, lorsqu'un mouvement est détecté, les capteurs d'image latéraux qui leurs sont juxtaposés. Si des images additionnelles sont requises, le capteur d'image **420** central peut être déclenché un temps prédéfini plus tard (par exemple, une ou deux secondes, le temps que l'article soit posé et/ou qu'une variation positive dans le poids du contenant portatif **4** soit détectée).

Le dispositif **41** d'assistance à l'achat comprend par ailleurs, un capteur de position **421.** Ce capteur de position **421** est tout moyen apte à capter des données permettant d'estimer la position du dispositif **41** d'assistance à l'achat au sein du point de vente **10.** A titre d'exemple, le capteur de position **421** est une puce RFID, un capteur sonore (c.à.d. un microphone), une puce Bluetooth^{®}, un réseau d'antennes, ou un récepteur GPS (lorsque, le signal GPS permet une localisation suffisamment précise du dispositif **41** au sein du point de vente **10**).

La position du dispositif **41** d'assistance à l'achat à l'intérieur du point de vente **10** peut être exprimée dans :
- un système de coordonnées XY bidimensionnel (ou XYZ, lorsque le point de vente 10 est sur plusieurs niveaux) associé au point de vente 10 ;
- un système de coordonnées curviligne, lorsqu'un parcours client est imposé au client **3** ;
- un système de partition de l'espace du point de vente **10** en plusieurs parties, tels que des rayons **2** définis par des gondoles de magasins (« rayon de confiserie », « rayon culture » par exemples), des zones (entrée du magasin, allée centrale, zone discount, zone promotion, zone des produits biologiques, une certaine catégorie ou marque de produits, environnement d'une caisse enregistreuse par exemples), ou des niveaux (rez-de-chaussée, niveau **1** ou niveau **2** par exemple) ; ou
- une combinaison de ces systèmes.

Dans certains modes de réalisation, le capteur de position **421** est configuré pour capter des signaux émis depuis :
- des balises (de type, par exemple, « Bluetooth^{®} Low energy », balises RFID, balises Bluetooth, balises Wifi, balises sonores) ou des antennes déployées suivant un maillage couvrant le point de vente **10.** Ces balises diffusent, dans certains modes de réalisation, des signaux/fréquences attribués à des zones ou des rayons **2** et permettent la localisation précise du dispositif **41** d'assistance à l'achat au sein du point de vente **10** ;
- des étiquettes de prix électroniques, fixées aux tablettes des gondoles de magasin. En effet, de même que les informations de prix ou aussi d'une opération promotionnelle, une information de localisation (par exemples, l'identifiant du rayon **2,** coordonnées dans le point de vente **10,** ou un identifiant associé à une localisation du point de vente **10**), peut être mémorisée dans ce type d'étiquette électronique,
à l'effet d'en déduire la position, absolue ou relative, du dispositif **41** d'assistance à l'achat dans le point de vente **10.**

Dans certains modes de réalisation, la position du dispositif **41** d'assistance à l'achat est estimée en écoutant en permanence, périodiquement, ou sur demande de l'unité de traitement **415,** le signal radio en diffusion au sein du point de vente **10.**

Dans certains modes de réalisation, la position du dispositif **41** d'assistance à l'achat est datée (horodatée) et mémorisée dans une mémoire tampon, de taille prédéfinie. Les positions antérieures du dispositif **41** d'assistance à l'achat dans le point de vente **10** sont, ainsi, disponibles à l'unité de traitement **415.**

Le dispositif **41** d'assistance à l'achat comprend, par ailleurs, un capteur de distance **424.** Ce capteur de distance **424** est configuré pour mesurer sans contact une distance entre ce capteur de distance **424** et un article **1,** ou plus généralement un objet, compris au moins partiellement dans le champ de mesure de ce capteur de distance **424.**

Le capteur de distance **424** peut être un capteur de mesure de distance ultrasonique ou un capteur de mesure de distance optique tel qu'un capteur de mesure de distance laser, ou un capteur de mesure de distance infrarouge.

La mesure sans contact de la distance peut être basée sur le principe de triangulation, sur le temps de transit de la lumière ou du son (dans les cas d'un capteur ultrasonique) par exemples.

Un capteur de distance **424** disposé dans le dispositif **41** d'assistance à l'achat de sorte qu'il soit en regard de l'ouverture du panier portatif **4,** lorsque ce panier portatif **4** est porté par l'intermédiaire du dispositif **41** d'assistance à l'achat, permet de contrôler la hauteur du contenu du contenant portatif **4.** Une variation dans la hauteur du contenu du contenant portatif **4** due à l'ajout ou au retrait d'un article **1** dans/depuis le contenant portatif **4** peut, ainsi, être détectée par ce capteur de distance **424.** Dans un mode de réalisation, l'unité de traitement **415** commande, suite à la détection d'une telle variation, la capture d'une ou plusieurs images à l'aide de capteurs d'image **420** prédéfinis. Ces images peuvent indiquer un nouvel arrière-plan à prendre en considération par la suite dans le traitement des images acquises. Dans un autre mode de réalisation, l'unité de traitement **415** vérifie, suite à une variation dans la hauteur du contenu du contenant portatif **4,** s'il y a également une variation dans le poids du contenant portatif **4.**

Dans un mode de réalisation, un premier capteur de distance **424** et un deuxième capteur de distance **424** sont, respectivement, disposés sur deux faces en regard du dispositif **41** d'assistance à l'achat de sorte à pouvoir estimer, à partir des mesures de distance effectuées par ces deux capteurs de distance **424,** une dimension selon une certaine direction (longitudinale, transversale, verticale, ou quelconque) d'un article **1** traversant (ou passant à travers) l'ouverture du contenant portatif **4** et se trouvant donc au moins partiellement dans leurs champs respectifs de mesure.

Dans un mode de réalisation, une pluralité de capteurs disposés deux à deux sur des faces en regard du dispositif **41** d'assistance à l'achat permet d'avoir une estimation des dimensions d'un article **1** selon plus d'une direction.

Les mesures effectuées par les capteurs de distance **424** permettent, en combinaison ou en complément avec des dimensions qui pourraient être déduites à partir des images acquises par les capteurs d'image **424,** d'estimer une ou plusieurs dimensions (largeur, longueur, hauteur) d'un article **1.**

Dans un mode de réalisation, la détection au moyen du capteur de mouvement **418** d'un mouvement à travers l'ouverture du contenant portatif **4** déclenche la mesure sans contact de distance par le ou les capteurs de distance **424.**

Dans un autre mode de réalisation, l'unité de traitement **415** commande un capteur d'image **420** en fonction d'une ou plusieurs mesures de distance effectuées par un capteur de distance **424.** A titre d'exemple, l'unité de traitement **415** commande, en fonction d'une distance mesurée par un capteur de distance **424,** un capteur d'image **420** pour effectuer un zoom arrière, un zoom avant, ou une orientation dans une certaine direction.

Dans certains modes de réalisation, le ou les moyens de rétention **414** comprennent avantageusement un capteur de contact **422.** Ce capteur de contact **422** permet de détecter si le dispositif **41** d'assistance à l'achat est monté ou non sur un contenant portatif **4,** le port ou la pose du contenant portatif **4** porté au moyen du dispositif **41** d'assistance à l'achat et en informer l'unité de traitement **415.**

Dans certains modes de réalisation, le capteur de contact **422** est agencé dans la face intérieure du moyen de rétention **414.** Dans d'autres modes de réalisation, un premier capteur de contact **422** et un deuxième capteur de contact **422** sont, respectivement, agencés dans la face intérieure inférieure et la face intérieure supérieure du moyen de rétention **414** sous forme d'un anneau. Dans ce cas, le premier capteur permet de détecter la suspension du contenant portatif **4** au moyen du dispositif **41** d'assistance à l'achat (le contenant portatif **4** étant en contact avec la face intérieure inférieure du moyen de rétention **414**), alors que le deuxième capteur **422** permet de détecter la pose de ce contenant portatif **4** sur un support ou au sol (où le contenant portatif **4** entre en contact avec la face intérieure supérieure du moyen de rétention **414**).

L'unité de traitement **415** est, dans certains modes de réalisation, pourvue avantageusement d'une mémoire de stockage **423.** Cette mémoire de stockage **423** comprend une base de données, établie au préalable, d'informations relatives à la liste des articles **1** proposés à la vente par le point de vente **10.**

Les informations relatives aux articles **1** comprennent un ou plusieurs modèle(s) visuel(s) (ou signature visuelle) pour chaque article **1.** On entend, par modèle visuel d'un article **1,** toute description, basée sur des descripteurs et/ou des propriétés visuelles, discriminante de cet article **1** parmi la liste des articles proposés à la vente par le point de vente **10.**

Plus généralement, un modèle visuel comprend toute donnée d'image (couleur, texture, contraste, région, contour, forme géométrique, dimensions, modèle 3D, pixels, structure par exemples) avec lesquelles on peut effectuer une corrélation avec une image acquise en vue de la reconnaissance d'un article **1.** A titre d'exemples, le modèle visuel d'un article **1** comprend une pluralité d'images différentes de cet article **1.** Ces images correspondent, dans certains modes de réalisation, aux différentes vues (côtés) de l'article **1.**

Dans certains modes de réalisation, le modèle visuel comprend avantageusement un modèle d'apprentissage profond (en anglais, « Deep learning ») ou tout autre modèle basé sur une méthode d'apprentissage automatique permettant de reconnaitre un article **1** compris dans une ou plusieurs images.

Dans certains modes de réalisation, plus d'un modèle visuel est associé à un même article **1,** ces modèles couvrant un changement dans l'apparence visuelle de l'article **1** lors d'une opération promotionnelle par exemple.

Les informations relatives aux articles **1** stockées dans la mémoire de stockage **423** comprennent, en outre, des métadonnées relatives à chaque article **1** telles que le poids, la position dans le point de vente **10,** le code universel du produit (un code-barres ou un code QR connus sous le nom de code UPC pour « Universal Product Code »), le prix, une référence interne au point de vente **10,** la marque commerciale, un nom, un texte ou tout descriptif d'un article **1,** et/ou un symbole alphanumérique.

Ces informations sont régulièrement mises à jour, pour tenir compte des nouveaux articles **1** et/ou de changements dans la signature visuelle (un nouvel emballage par exemple) d'un article **1** déjà proposé à la vente. En outre, les données mémorisées de localisation/position des articles **1** dans le point de vente **10** sont mises à jour automatiquement ou manuellement, suite à chaque réassortiment des rayons **2** du point de vente **10.**

Dans certains modes de réalisation, l'unité de traitement **415** comprend, également, une application de reconnaissance d'image. En se basant sur les informations mémorisées dans la base de données, l'application de reconnaissance d'image permet d'estimer, avec un indice (ou coefficient) de confiance, l'article **1** présent dans des images capturées par le ou les capteurs d'image **420.** Les dimensions de l'article **1** estimées à partir des mesures de distance effectuées par les capteurs de distance **424** sont utilisées, dans un mode de réalisation, par l'application de reconnaissance d'image, comme une donnée supplémentaire facilitant la reconnaissance/estimation de l'article **1.**

Pour cela, l'application de reconnaissance d'image est configurée pour effectuer une analyse numérique et extraire les paramètres pertinents de ou des images acquises par le ou les capteurs d'image **420** et comparer ces paramètres (en utilisant l'un des divers algorithmes de reconnaissance d'image connus) aux informations, mémorisées au préalable, relatives à une liste réduite d'articles **1** parmi la liste (ou l'ensemble) des articles **1** proposés à la vente par le point de vente **10.** Suite à cette comparaison, l'application de reconnaissance d'image détermine si un article **1** parmi cette liste réduite d'articles **1** est compris, à un indice de confiance près, dans les images acquises.

En effet, l'application de reconnaissance d'image permet d'extraire, sous formes d'attributs, les propriétés visuelles des images acquises (couleur, texture, contraste, contour, forme géométrique, dimensions, pixels, régions, structure par exemples) qui, par comparaison avec les informations mémorisées au préalable, permettent d'estimer l'article **1** compris dans les images acquises (reconnaissance d'images par le contenu).

Dans un mode de réalisation, l'application de reconnaissance d'image met en oeuvre un ou plusieurs réseaux de neurones convolutifs aptes à apprendre par eux-mêmes comment extraire, à partir des données d'image acquises, les caractéristiques pertinentes permettant d'estimer, à l'aide d'un apprentissage profond, un article **1** compris dans les images acquises. Un réseau de neurones est, dans un mode de réalisation, attribué à un rayon, à un ensemble de rayons ou à une zone du point de vente **10.** Ceci permet d'exploiter la position, dans le point de vente **10,** du dispositif **41** d'assistance à l'achat dans l'estimation de l'article **1** compris dans les images acquises. Un réseau de neurones peut faire appel à des bases de données d'images préétablies.

En variante ou en combinaison, l'application de reconnaissance d'image recherche dans les images acquises les propriétés visuelles de certains articles **1** (formant une liste réduite) choisis parmi la liste des articles **1** proposés à la vente. Une ou plusieurs corrections et/ou transformations peuvent être appliquées au préalable aux images acquises, telle qu'une segmentation à l'effet de distinguer l'arrière-plan, ou une rotation pour réorienter une image.

Dans certains modes de réalisation, des données volumétriques (tailles et forme ou la structure tridimensionnelle) d'un article sont estimées à partir d'images acquises depuis un ou plusieurs capteurs d'image **420** tels qu'une caméra 3D, ou une pluralité de caméra 2D.

Dans certains modes de réalisation, la reconnaissance d'image comprend la comparaison d'une donnée extraite à partir de l'image acquise aux métadonnées mémorisées relatives à une liste réduite d'articles **1** parmi les articles **1** proposés à la vente. Les données extraites peuvent comprendre le code universel du produit, un texte (généralement extrait avec une méthode d'OCR pour « Optical Character Recognition), un contenu alphanumérique, ou un symbole graphique.

En se basant sur les informations (modèles visuels et métadonnées) relatives à une liste réduite d'articles **1,** l'application de reconnaissance d'image retourne, dans certains modes de réalisation, une liste d'articles candidats, respectivement, avec un indice de confiance. Cette liste d'articles candidats peut être limitée à un nombre prédéfini (par exemple, les trois articles ayant les indices de confiances les plus importants) ou aux articles candidats avec un indice de confiance supérieur à une valeur prédéfinie (par exemple, 90% ou 95%). En variante, l'application de reconnaissance d'image retourne seulement l'article candidat le plus probable, c.à.d. celui qui a l'indice de confiance le plus important. Si, selon l'application de reconnaissance d'image, l'image acquise ne comprend, avec un indice de confiance supérieur à une valeur prédéfinie, aucun des articles **1** de la liste réduite d'articles **1** utilisés dans la comparaison, une liste vide est retournée (autrement dit, aucun des articles parmi lesquels la recherche est faite n'est trouvé, par l'application de reconnaissance d'image, dans le ou les images acquises).

Lorsque seulement une vue partielle d'un article **1** est comprise dans une image acquise en raison d'occultations par d'autres objets (main du client **3,** un autre article **1**) ou parce que l'article **1** est partiellement hors du champ de vue d'un capteur d'image **420,** l'application de reconnaissance d'image se base sur les informations extraites de la partie visible et, éventuellement, des mesures de distance effectuées par les capteurs de distance **424,** et utilise un modèle d'apprentissage profond (« deep learning ») pour retourner une estimation de cet article **1.**

Le modèle visuel mémorisé d'un article **1** peut être amélioré avec une méthode d'apprentissage automatique (qu'elle soit supervisée ou non), avec ou sans validation d'un opérateur. Les images prises par les capteurs d'image **420** sous diverses conditions (éclairage, angle de vue, déformation, présence de poussière, occultation par exemples) peuvent, en effet, être utilisées pour améliorer les performances de l'application de reconnaissance d'image. Dans ce cas, la mise à jour du modèle visuel peut être effectuée automatiquement en temps réel, ou en différée une fois validée par un opérateur. Elle permet d'améliorer la capacité à reconnaître et à identifier des articles **1** dans des conditions d'éclairages différentes et avec des images partielles ou complètes d'articles **1** prises sous différents angles de vue.

Un article **1** peut être identifié sur la base d'une reconnaissance d'image, de préférence, avec une vérification de la correspondance entre son poids mesuré et le poids correspondant mémorisé dans les métadonnées, sans recours à la recherche de son code UPC. Cependant, la reconnaissance du code UPC d'un article **1** dans une ou plusieurs images acquise renforce avantageusement l'indice de confiance dans la reconnaissance de cet article **1.**

L'indice de confiance avec lequel un article est identifié est, dans certains modes de réalisation, une combinaison d'un premier indice de confiance lié à la reconnaissance de l'article par l'image et d'un deuxième indice de confiance lié la reconnaissance de l'article par son poids. L'indice de confiance minimal acceptable peut être différent d'un article **1** ou d'une catégorie d'articles **1** à une autre, ou en fonction du prix de l'article **1** estimé. En d'autres termes, si le prix de l'article **1** estimé est :
- inférieur à un montant prédéterminé (par exemple, 10€), alors cette estimation est admise si elle est obtenue avec un indice de confiance supérieur à 90% ;
- compris entre un premier montant et un deuxième montant (par exemple, entre 10 €et 50 €), alors cette estimation est admise si elle est obtenue avec un indice de confiance supérieur à 95 %;
- supérieur à un montant prédéfini (par exemple, 50 €), alors cette estimation est admise si elle est obtenue avec un indice de confiance supérieur à 99%.

L'unité de traitement **415** est, dans certains modes de réalisation, configurée pour mesurer la variation dans le poids du contenant portatif **4** suite à toute détection de mouvement par le capteur de mouvement **418.** Pour cela, l'unité de traitement **415** calcule, dans certains modes de réalisation, une différence entre les valeurs de poids captés par le capteur du poids **419** juste avant et juste après la capture d'un mouvement renseigné par le capteur de mouvement **418.** L'unité de traitement **415** compare cette différence aux poids des articles candidats déterminés par l'application de reconnaissance d'image, dans le but d'estimer l'article **1** qui vient d'être posé dans ou retiré du contenant portatif **4.**

Lorsque la variation dans les poids relevés par le capteur de poids **419** est positive, il est alors considéré qu'un article **1** vient d'être déposé dans le contenant portatif **4.** Dans le cas contraire, il est considéré qu'un article **1** vient d'être retiré du contenant portatif **4.** Une liste actualisée des articles **1** compris dans le contenant portatif **4** est, ainsi, tenue à jour au fur et à mesure de l'opération de magasinage du client **3** dans le point de vente **10.**

Dans certains modes de réalisation, lorsque la variation dans les poids relevés par le capteur de poids **419** est négative (c.à.d. dans le cas d'un retrait d'un article **1** depuis le contenant portatif **4**), la liste réduite des articles **1,** utilisée par l'application de reconnaissance d'image pour reconnaitre un article **1** compris dans les images acquises, comprend la liste des articles **1** estimés compris dans le contenant portatif **4** avant ce retrait.

Selon l'invention, la liste réduite des articles **1** utilisés pour reconnaitre un article **1** compris dans les images acquises comprend les articles dont les localisations dans le point de vente **10** se trouvent au voisinage de la position de du dispositif **41** d'assistance à l'achat.

Un article **1** est estimé au voisinage de la position du dispositif **41** d'assistance à l'achat est, dans certains modes de réalisation, lorsque la distance entre la localisation de l'article 1 et la position du dispositif **41** d'assistance à l'achat est inférieure à une valeur prédéfinie.

Dans un autre mode de réalisation, un article **1** est estimé au voisinage de la position du dispositif **41** d'assistance à l'achat lorsque la localisation de cet article **1** et la position du dispositif **41** d'assistance à l'achat sont comprises dans une même zone prédéfinie (un rayon **2** ou toute autre zone du point de vente **10**). Cette zone peut être de diverses formes telles que circulaire, carré, rectangulaire, en forme de L ou de forme géométrique quelconque. L'unité de traitement **415** est apte à détecter, au moyen d'une méthode de géo-repérage ou de gardiennage virtuel (en anglais, « geofencing »), la zone dans laquelle se trouve le dispositif **41** d'assistance à l'achat.

Dans un autre mode de réalisation, un article **1** est estimé au voisinage de la position du dispositif **41** d'assistance à l'achat lorsque la distance entre la localisation de cet article **1** et une position antérieure du dispositif **41** d'assistance à l'achat est inférieure à une valeur prédéfinie, ou lorsque la localisation de cet article **1** et une position antérieure du dispositif **41** d'assistance à l'achat sont comprises dans une même zone prédéfinie du point de vente **10** (notamment, lorsque le client prélève un article mais ne le pose dans son contenant portatif **4** que quelques mètres plus loin). La reconnaissance de l'article **1** porte, dans ce cas, sur les articles disposés dans les rayons/zones de la position de vente **10** déjà parcourus/visités le client **3,** en remontant progressivement dans l'historique de déplacement du client **3.**

Dans certains modes de réalisation, une position antérieure du dispositif **41** d'assistance à l'achat est une position à laquelle ce dispositif est resté au moins une durée prédéfinie (c.à.d. le temps durant lequel le client **3** s'est arrêté et a prélevé un article **1**). Ceci permet de réduire la liste des positions antérieures du dispositif **41** d'assistance à l'achat à prendre en considération.

Dans certains modes de réalisation, la liste réduite d'articles **1** parmi les articles **1** proposés à la vente comprend les articles **1** associés à une gondole de magasin estimé au voisinage de la position du dispositif **41** d'assistance à l'achat. Une gondole de magasin est estimée au voisinage du dispositif **41** d'assistance à l'achat lorsque la distance les séparant est inférieure à une distance prédéfinie, ou lorsque la gondole de magasin et la position du dispositif **41** d'assistance à l'achat sont comprises dans une même zone prédéfinie du point de vente **10.**

Dans d'autres modes de réalisation, une gondole de magasin est estimée au voisinage du dispositif **41** d'assistance à l'achat lorsque la distance la séparant d'une position antérieure du dispositif **41** d'assistance à l'achat est inférieure à une distance prédéfinie, ou lorsque la gondole de magasin et une position antérieure du dispositif **41** d'assistance à l'achat sont comprises dans une même zone prédéfinie du point de vente **10.**

Avantageusement, l'utilisation d'une liste réduite d'articles **1** parmi laquelle est recherché un article **1** compris, au moins partiellement, dans les images acquises (au lieu de rechercher sur l'ensemble de la liste des articles **1** proposés à la vente) a pour effet d'accélérer et faciliter la reconnaissance de cet article **1.**

La localisation du dispositif **41** d'assistance à l'achat dans le point de vente **10** est, ici, utilisée pour réduire le champ de recherche, afin d'alléger et accélérer l'estimation de l'article **1** compris dans les images acquises.

Dans d'autres modes de réalisation, la liste réduite des articles **1** utilisée pour l'estimation de l'article **1** compris dans les images acquises comprend la liste des articles achetés par le client **3** lors des achats antérieurs (historique d'achat du client **3** dans le point de vente **10**).

Dans d'autres modes de réalisation, la liste réduite des articles **1** utilisée pour l'estimation de l'article **1** compris dans les images acquises comprend les articles **1** proposés à la vente ayant un poids sensiblement égal à la variation du poids mesurée par le capteur de poids **419.**

Dans d'autres modes de réalisation, à la détection d'une variation dans les poids relevés le capteur de poids **419** ou dans la hauteur du contenu du contenant portatif **4** mesurée par le capteur de distance **424,** l'unité de traitement **415** déclenche la capture d'une ou plusieurs images de l'intérieur du contenant portatif à l'aide d'au moins un capteur d'image **420,** notamment le capteur d'image **420** central. Ces images sont utilisées, dans certains modes de réalisation, comme un moyen de vérification additionnelle dans l'identification d'un article **1** déposé dans/retiré du contenant portatif **4,** ou comme une donnée (notamment, représenter l'arrière-plan) permettant l'identification d'un article **1** lors d'une étape de reconnaissance d'image ultérieure.

L'identification des articles déposés dans/retirés depuis le contenant portatif **4** vise la tenue d'une liste actualisée des articles **1** qui y sont estimés présents. Cette liste actualisée des articles **1** comprend une identité de chaque article (Code UPC, référence interne au point de vente **10,** marque commerciale, poids, une photo illustrative, par exemples), le prix correspondant, la somme totale actualisée des articles **1** (estimés) compris dans le contenant portatif **4.**

Cette liste actualisée des articles **1** compris dans le contenant portatif **4** est mise à jour, au fur et à mesure que le client **3** compose son panier dans le point de vente **10.** Autrement dit, au fur et à mesure que chaque nouvel article **1** est placé dans le contenant portatif **4** ou retiré de celui-ci, une identification de ce dernier est effectuée et la liste est mise à jour en conséquence.

Dans certains modes de réalisation, en raison de la charge de calcul ou de l'autonomie en énergie électrique, l'identification de l'article est réalisée par un serveur de traitement distant (non représenté), auquel l'unité de traitement **415** est connectée via l'interface de communication sans fil **417** (une liaison WiFi par exemple). Ce serveur de traitement est pourvu de l'application de reconnaissance d'image et de la base de données (identique à celle cité ci-dessus ou plus complète) d'informations relatives aux articles **1** proposés à la vente. Ces informations comprennent, pour chaque article **1,** un modèle visuel et des métadonnées (poids, prix, localisation dans le point de vente **10,** une description, le code UPC, une référence interne par exemple).

Le serveur de traitement permet d'identifier, avec un indice de confiance supérieur à une valeur prédéfinie, à partir des données collectées par l'unité de traitement **415** depuis les capteurs, un article qui vient d'être posé ou retiré depuis le contenant portatif **4,** de sorte à pouvoir tenir, par l'unité de traitement **415** et/ou par le par le serveur de traitement, une liste actualisée des articles **1** compris (ou plus précisément, estimés compris) dans le contenant portatif **4** du client **3.**

Dans ce cas, l'unité de traitement **415** transfère au serveur de traitement les données recueillies depuis les capteurs. Dans certains modes de réalisation, ces données sont transmises au serveur de traitement dès la détection d'un mouvement par le capteur de mouvement **418.** En se basant sur les données fournies par l'unité de traitement **415** et de la base de données, le serveur de traitement détermine, avec un indice de confiance supérieur à une valeur prédéfinie, l'article 1 compris dans une ou plusieurs images acquises qu'il transmet, éventuellement avec d'autres informations concernant cet article **1,** à l'unité de traitement **415.**

Dans certains modes de réalisation, le traitement est partagé entre l'unité de traitement **415** et le serveur de traitement. Par exemple, le serveur de traitement se charge de la reconnaissance d'image de l'article en question, cette tâche ayant besoin, relativement, de plus de ressources que les autres tâches pour l'identification d'un article **1.** En variante, il n'est fait appel au serveur de traitement que lorsque la liste réduite d'articles **1** comprend plus d'un nombre prédéfini d'articles **1,** ou uniquement lorsque l'unité de traitement **415** n'arrive pas à identifier un article **1** en utilisant une base de données réduites (le serveur étant équipé, dans ce cas, d'une base de données plus complète).

Dans certains modes de réalisation, un ou plusieurs serveurs de traitement sont partagés entre plusieurs points d'accès sans fil, répartis dans des points de vente **10** faisant partie ou non d'une même enseigne. A titre d'exemple, un serveur de traitement partagé entre plusieurs points de vente **10** situés dans un centre commercial, ou dans une zone « duty free ».

Dans d'autres modes de réalisation, il est fait recours au serveur de traitement lorsque l'autonomie en énergie électrique du dispositif **41** d'assistance à l'achat est inférieure à un seuil prédéfini.

Le serveur de traitement peut lui-même déléguer toutes ou une partie des requêtes issues de l'unité de traitement **415** à un ou plusieurs autres serveurs, en vue d'apporter une réponse plus rapidement.

Plus généralement, l'estimation de l'article **1** qui vient d'être déposé ou retiré du contenant portatif peut être réalisée en local au moyen de l'unité de traitement **415** et/ou à distance au moyen du serveur de traitement.

Dans certains modes de réalisation, les moyens de traitement (c.à.d. l'unité de traitement **415** ou le serveur de traitement) est en communication sans fil (ou aussi câblée, pour le serveur de traitement) avec d'autres serveurs (non représentés) de l'infrastructure informatique du point de vente **10** tels les caisses enregistreuses, le système d'encaissement, le serveur de comptes clients, un serveur de notification « Push », et/ou un serveur de messagerie.

Dans d'autres modes de réalisation, l'unité de traitement **415** comprend un identifiant permettant d'identifier d'une manière unique le dispositif **41** d'assistance à l'achat.

Dans d'autres modes de réalisation, le dispositif **41** d'assistance à l'achat comprend un ou plusieurs lecteurs de carte (avec ou sans contact) (non représentée) connectés à l'unité de traitement **415.** Un lecteur de carte permet d'associer le dispositif **41** d'assistance à l'achat à un identifiant client lu à partir d'une carte (qu'elle soit physique ou logicielle sous la forme d'une application mobile installée dans un terminal utilisateur) telle qu'une carte de fidélité, une carte d'abonné, une carte de paiement, ou une carte d'adhérent. Un identifiant client peut être un numéro de carte, un numéro de téléphone, un numéro d'adhérent, une adresse électronique (adresse émail), nom/prénom, date de naissance.

L'unité de traitement **415** est configurée pour associer la liste actualisée des articles **1** estimés compris dans le contenant portatif **4** à l'identifiant client, à l'identifiant de l'unité de traitement ou à une combinaison de ces deux identifiants.

Dans certains modes de réalisation, l'unité de traitement **415** comprend une fonctionnalité de paiement et/ou de gestion des points de fidélité. En effet, disposant de la liste actualisée des articles **1** compris dans le contenant portatif **4,** il possible au client de payer ces articles **1** à partir d'une application mobile dédiée qui communique avec cette fonctionnalité. Suite au paiement, la fonctionnalité de gestion des points de fidélité met automatiquement à jour le compte du client tenu par un serveur de comptes clients.

Pour le fonctionnement des composants électroniques compris dans le dispositif **41** d'assistance à l'achat, ce dernier comprend une source d'énergie électrique rechargeable (notamment, une batterie rechargeable) et un branchement permettant son rechargement (non représentés).

Le dispositif **41** d'assistance à l'achat comprend avantageusement des voyants (des LEDs multicolores) permettant d'informer le client **3** de l'état de fonctionnement du dispositif **41** d'assistance à l'achat (en fonctionnement, identifiant client lu avec succès, charge électrique faible, échec d'identification d'un article, identification réussie d'un article qui vient d'être déposé/retiré du contenant portatif **4,** validation d'un paiement). En variante ou en combinaison, le dispositif **41** d'assistance à l'achat comprend un écran d'affichage connecté à l'unité de traitement **415** et configuré pour afficher à destination du client **3,** d'une manière automatique ou sur demande de celui-ci via des boutons physiques ou virtuels (écran tactile), des informations concernant la session d'assistance à l'achat. Ces informations comprennent, par exemples, l'identifiant client et/ou l'identifiant du dispositif **41** d'assistance à l'achat, la liste actualisée des articles **1** compris dans le contenant portatif **4** avec le montant total, de préférence, détaillé de ces articles **1,** l'historique des ajouts/retraits des articles **1** dans/depuis le contenant portatif **4,** toute information renseignant sur l'état de fonctionnement du dispositif **41** d'assistance à l'achat (photo et/ou nom du dernier article **1** identifié, message d'erreur, informations relatives au processus de paiement). Dans un mode de réalisation, l'unité de traitement **415** est configurée pour afficher, sur l'écran d'affichage, la position actuelle et/ou les positions antérieures, dans le point de vente **10,** du dispositif **41** d'assistance à l'achat. Dans un mode de réalisation, l'unité de traitement **415** est configurée pour afficher sur cet écran d'affichage un contenu promotionnel ou publicitaire récupéré depuis un serveur distant. De préférence, ce contenu publicitaire ou promotionnel est choisi en fonction de la position du dispositif **41** d'assistance à l'achat et/ou de la liste actualisée des articles **1** compris dans le contenant portatif **4,** et/ou d'informations obtenues à l'aide d'un identifiant du client **3** (historique des achats de ce client **3** en ce point de vente **10,** l'âge, ou le genre du client **3**).

En variante ou en combinaison, le dispositif **41** d'assistance à l'achat notifie, via l'interface de communication sans fil **417,** des informations/alertes à une application mobile installée sur le terminal mobile du client **3** (la liste actualisée des articles, ticket de caisse électronique, information supplémentaire concernant un certain article, alerte d'un article non identifié, invitation du client **3** à redéposer le dernier article non-identifié, inviter le client à confirmer un article déterminé avec un indice de confiance en-dessous d'une valeur prédéfinie par exemples).

Dans une utilisation du dispositif **41** d'assistance à l'achat décrit ci-dessus, ce dernier est mis à disposition aux clients **3** par le point de vente **10** sur un support d'anses **6** disposé à une entrée du point de vente **10.** De préférence, le support d'anses **6** assure le rechargement électrique de la source d'alimentation électrique recherchable du dispositif **41** d'assistance à l'achat qu'il supporte. Ce support d'anses **6** représente donc aussi une station de recharge électrique.

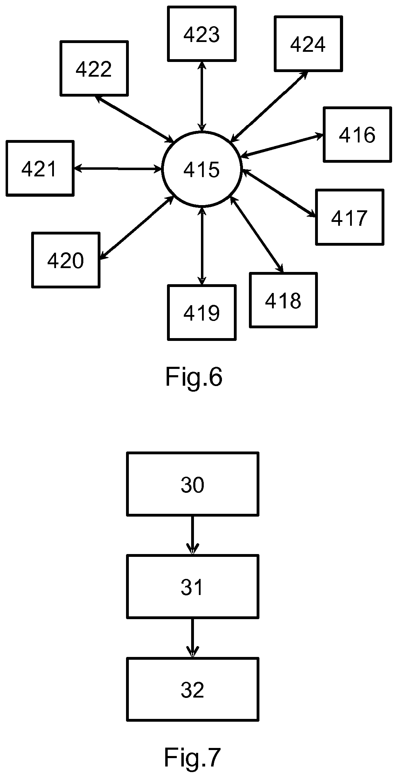

Une mise en oeuvre illustrative du procédé d'assistance à l'achat d'un client **3** est illustrée par le diagramme de la figure 7.

Le client **3** prélève le dispositif **41** d'assistance à l'achat et le monte sur un contenant portatif **4** qui lui appartient ou qui est mis à sa disposition par le point de vente **10.**

Dans certains modes de réalisation, la détection par le capteur de contact **422** du port d'un contenant portatif **4** par l'intermédiaire du dispositif **41** d'assistance à l'achat (sous la forme d'une anse, par exemple) déclenche l'ouverture **30** d'une session d'assistance à l'achat. En alternative, l'ouverture **30** d'une session d'assistance à l'achat est déclenchée par l'identification du client **3** par l'intermédiaire du lecteur de carte du dispositif **41** d'assistance à l'achat. La carte du client peut être une carte physique (une carte de fidélité, une carte d'abonné, une carte bancaire avec ou sans contact par exemple) ou virtuelle sous la forme d'une application mobile installée sur un terminal mobile apte à communiquer avec le lecteur de carte et permettant d'identifier d'une manière unique le client **3.** L'identifiant du client peut être composé d'une ou plusieurs données telles qu'un numéro de carte, un numéro d'adhérent, un numéro de téléphone, une adresse courriel, une date de naissance, la date d'émission d'une carte, le nom, ou le prénom du client. L'identification du client **3** permet, dans certains modes de réalisation, l'accès à d'autres informations telles que l'historique des achats de ce client **3** en ce point de vente **10,** l'âge, ou le genre du client **3.**

Dans certains modes de réalisation, une session d'assistance à l'achat est ouverte par l'unité de traitement **415** à la détection d'un changement au-dessus d'une valeur prédéfinie dans l'une quelconque des données captées précédemment par les capteurs et mémorisées, par l'unité de traitement **415,** dans une mémoire tampon.

Par exemple, une session est ouverte dès la détection d'un changement dans la localisation du dispositif **41** d'assistance à l'achat et/ou dans le poids du contenant portatif **4,** et/ou dès la détection d'un mouvement par le capteur de mouvement **418.**

Dans d'autres modes de réalisation, la session d'assistance à l'achat est ouverte manuellement en appuyant sur un bouton prévu à cet effet dans le dispositif **41** d'assistance à l'achat.

Un identifiant de session d'assistance à l'achat est attribué à la session ouverte. Cet identifiant de session est, dans certains modes de réalisation, obtenu par combinaison de l'identifiant client avec d'autres données telles qu'un code généré d'une manière aléatoire, la date ou l'heure de l'identification, ou un code identifiant le dispositif **41** d'assistance à l'achat mémorisé en permanence par l'unité de traitement **415.**

Lorsque le dispositif d'assistance à l'achat est connecté à un serveur de traitement, la session d'assistance à l'achat est ouverte auprès de ce serveur. Sinon, la session est ouverte en local et pris en charge par l'unité de traitement **415.**

En l'absence d'une identification du client **3,** l'identifiant de session comprend le code identifiant le dispositif **41** d'assistance à l'achat seul ou en combinaison avec tout autre code.

La session d'assistance à l'achat au point de vente **10** possède une durée de vie prédéfinie. Cette durée de vie peut dépendre de la taille du point de vente **10,** ou du nombre d'articles proposés à la vente par ce point de vente **10.** La session d'assistance à l'achat est fermée dès que cette durée de vie est écoulée ou dès qu'aucune activité n'est captée par les capteurs disposés dans le dispositif **41** d'assistance à l'achat pendant un temps prédéfini.

Dans d'autres modes de réalisation, la session d'assistance à l'achat est maintenue tant qu'une ou plusieurs données captées par des capteurs du dispositif **41** d'assistance à l'achat (le capteur de position **421** et/ou le capteur de mouvement **418** par exemples) et mémorisées par l'unité de traitement **415** dans une mémoire tampon sont changées avant qu'un temps d'inactivité prédéfini ne soit écoulé. Autrement dit, une session d'assistance à l'achat peut être fermée dès que les données à la disposition de l'unité de traitement **415** sont inchangées pendant une durée prédéfinie. La durée de vie de la session d'assistance à l'achat est, dans ce cas, définie d'une manière dynamique.

La session d'assistance à l'achat peut également être fermée sur instruction d'un serveur distant (le serveur de traitement, ou le système d'encaissement suite à la validation d'un paiement par exemple).

Dans certains modes de réalisation, lorsque le client a ouvert la session d'assistance à l'achat au moyen d'une application mobile communicante avec le dispositif **41** d'assistance à l'achat, dès l'ouverture de la session d'assistance à l'achat, l'unité de traitement **415** échange des données avec cette application mobile installée sur le terminal mobile du client (par ex. un Smartphone, tablette, phablette), d'une manière automatique ou sur demande de cette dernière, de sorte à lier ou associer (de manière temporaire) ce terminal mobile au dispositif **41** d'assistance à l'achat, ou d'une manière équivalente, associer le client **3** au contenant portatif **4** (par rapport à tous les autres contenants portatifs **4** dans le point de vente **10**). Le client **3** peut à tout moment lors de son achat consulter, via son terminal mobile, la liste actualisée des articles compris dans le contenant portatif **4,** le prix par article et le prix total de ces articles.

A l'ouverture d'une session d'assistance à l'achat, il est supposé qu'aucun article **1** n'est encore déposé par le client **3** dans le contenant portatif **4.** Les mesures relevées par le capteur de poids **419** et le capteur de distance **424** sont donc supposées être, respectivement, le poids à vide et la hauteur à vide du contenu du contenant portatif **4.** Ces mesures sont mémorisées dans une mémoire tampon.

Dans certains modes de réalisation, une ou plusieurs images de l'intérieur (y compris le fond) du contenant portatif **4** sont captées par les capteurs d'image **420** à l'ouverture **30** de la session d'assistance à l'achat. Ces données d'images initiales peuvent faciliter plus tard la reconnaissance des articles **1** posés dans/retirés du contenant portatif **4.** Des informations comprises dans ces données d'images initiales permettent d'identifier l'arrière-plan dans des images acquises ultérieurement lors de la session d'assistance à l'achat.

Suite à l'ouverture **30** d'une session d'assistance à l'achat et lors de l'étape d'assistance **31** à l'achat, le dispositif **41** d'assistance à l'achat identifie, au fur et à mesure que le client **3** constitue son panier d'achat, les articles **1** déposés dans ou retirés depuis le contenant portatif **4,** de sorte à avoir une liste actualisée des articles compris dans le contenant portatif **4.**

Lors de l'étape d'assistance **31** à l'achat, l'unité de traitement **415** dispose des informations suivantes :
- la position actuelle (et, éventuellement, les positions antérieures) dans le point de vente **10** du dispositif **41** d'assistance à l'achat fournie par le capteur de position **421** ;
- le poids des articles **1** présents dans le contenant portatif **4** mesuré par le capteur de poids **419** ;
- une ou plusieurs images, dès la détection d'un mouvement par le capteur de mouvement **418.**

Comme expliqué ci-dessus, ces informations peuvent être utilisées en local par l'unité de traitement **415** ou à distance par le serveur de traitement à l'effet d'identifier, avec un certain indice de confiance, un article **1** qui vient d'être posé dans le contenant portatif **4** ou retiré de celui-ci.

En effet, à la détection d'un mouvement par l'un des capteurs de mouvement **418,** des images sont capturées par le ou les capteurs d'image **420** et des mesures de distances sont effectuées par les capteurs de distance **424** et ensemble mis à disposition de l'unité de traitement **415.**

Une estimation de la variation dans le poids du contenant portatif **4** est estimée, à partir des mesures relevées par le capteur de poids **419.** Si cette variation est sensiblement nulle, il est alors supposé qu'aucun article ne vient d'être posé dans/retiré depuis le contenant portatif **4.** Aucune action n'est, dans ce cas, entreprise.

Lorsqu'une variation positive (c.à.d. ajout d'un article **1**) dans le poids du contenant portatif **4** est supérieure à une valeur prédéfinie, la position du dispositif **41** d'assistance à l'achat (voire, aussi ses positions antérieures) est utilisée pour déterminer une liste réduite d'articles **1** parmi la liste des articles **1** proposés à la vente par le point de vente **10.** Ensuite, le poids de cet article (estimé égal à la variation dans le poids) et les images acquises sont utilisés par l'unité de traitement **415** ou par le serveur de traitement pour déterminer, avec un indice de confiance, l'article en question.

Dans le cas d'une variation négative dans le poids du contenant portatif **4,** la liste réduite des articles est la liste actualisée des articles compris dans le contenant portatif **4** tenue par l'unité de traitement **415** (ou par le serveur de traitement) juste avant ce changement de poids.

Dans d'autres modes de réalisation, la liste réduite des articles **1** sur laquelle se base les moyens de traitement (c.à.d. unité et/ou serveur de traitement) pour estimer un article **1** compris dans les images acquises est déterminé en fonction de la position actuelle et/ou les positions antérieures (à compter de l'ouverture **30** de la session d'assistance à l'achat par exemple) du dispositif **41** d'assistance à l'achat.

Dans certains modes de réalisation, la liste réduite des articles **1** comprend l'historique des achats réalisés par le client **3** dans le point de vente **10** ou les articles **1** en commun entre l'historique des achats et les articles **1** déterminés en fonction de la position (ou des positions antérieures) du dispositif **41** d'assistance à l'achat.

Dans certains modes de réalisation, lorsque le contenant portatif **4** est posé sur un support ou au sol (information qui peut être obtenue à partir des données retournées par le capteur de contact **422**), l'unité de traitement **415** maintien, pendant un temps prédéfini, la liste actualisée des articles estimés compris dans le contenant portatif **4** et identifie tout article déposés/retirés depuis ce contenant portatif **4,** sans prise en considération temporaire des mesures effectuées par le capteur de poids **419.**

Lorsque le moyen de traitement (à savoir l'unité de traitement **415** ou le serveur de traitement) ne détermine aucun article **1** avec un indice de confiance au-dessus d'un seuil prédéfini, il invite, dans certains modes de réalisation, le client **3** via une notification destinée à être affichée sur son terminal mobile à présenter le dernier article **1** qui vient d'être déposé ou retiré d'une manière plus claire, par exemple, au capteur d'image **420** central de sorte à faciliter son identification.

Si malgré les images additionnelles, l'article **1** n'est toujours pas identifié avec un indice de confiance prédéfini, les images acquises sont mémorisées par le serveur de traitement, afin d'être traitées ultérieurement par un opérateur.

A l'étape **32** d'encaissement, le client **3** fournit à une caisse enregistreuse un code identifiant le dispositif **41** d'assistance à l'achat (en le saisissant, ou en présentant un code-barres ou un code QR du dispositif à un lecteur de la caisse enregistreuse) et/ou un identifiant client (adresse émail, nom, prénom, numéro de téléphone par exemples) que l'unité de traitement **415** utilise pour lier le dispositif **41** d'assistance à l'achat à ce client **3.** Sur la base de cette information, la caisse enregistreuse communique directement avec l'unité de traitement **415** ou avec le serveur de traitement pour récupérer la liste actualisée des articles **1** compris dans le contenant portatif **4,** et prendre en charge le procédé de paiement.

Dans certains modes de réalisation, le dispositif **41** d'assistance à l'achat comprend une fonctionnalité de paiement mobile permettant l'encaissement du client **3** à l'aide de son terminal mobile. Une preuve de l'achat lui est transmise électroniquement.

Une fois la transaction d'achat terminée, la session d'assistance à l'achat est fermée et le dispositif **41** d'assistance à l'achat peut être redéposé sur le support d'anses **6.**

Dans les différents modes de réalisation décrits ci-dessus, il est fait référence à un client. Il convient de noter, cependant, que ce dispositif **41** d'assistance à l'achat peut également être utilisé par toute autre personne telle qu'un employé du point de vente **10** chargé de constituer un panier d'achat pour le compte d'un client.

Avantageusement, les méthodes et systèmes d'assistance à l'achat décrits ci-dessus permettent :
- d'identifier et comptabiliser en temps réel les articles **1** retenus par le client **3** pour l'achat, de sorte à faciliter le processus de paiement ;
- une numérisation en continu du contenu du contenant portatif **4,** au fur et à mesure que le client **3** fait ses courses ;
- de moins solliciter le client **3** dans le procédé d'achat, son implication lui étant invisible, et
- une numérisation fiable du contenu du contenant portatif **4,** favorisant un gain de temps et d'efficacité pour le client ;
- d'améliorer l'expérience d'achat (ou de magasinage, ou de shopping) du client, en réduisant le temps passé dans le point de vente au temps qui lui semble utile, et d'assurer, par conséquent, la satisfaction client, notamment par rapport au temps passé perçu.

Bien que le système d'assistance à l'achat soit décrit ci-dessus relativement à des modes de réalisation et à des variantes, l'homme du métier comprendra que ces modes de réalisation et variantes ne sont pas limitatifs et peuvent être combinés entre eux et/ou avec tout autre mode de réalisation équivalent. La portée de l'invention est définie par la revendication 1.

## Revendications

1. Système comprenant un dispositif **(41)** d'assistance à l'achat d'un client **(3)** dans un point de vente **(10)** au détail en libre-service, ce dispositif comprenant
- une partie centrale **(411)** ;
- une poignée **(413)** liée à la partie centrale **(411)** ;
- des bras de suspension **(412),** liés à la partie centrale et s'étendant de part et d'autre de la partie centrale **(411),** ces bras de suspension **(412)** étant destinés à être liés à un contenant portatif **(4)** pourvu d'une ouverture permettant le dépôt dans ce contenant portatif d'un article **(1)** proposé à la vente par le point de vente **(10),** de sorte à permettre le port de ce contenant portatif **(41)** par l'intermédiaire dudit dispositif **(41)** et que, lorsque ledit dispositif **(41)** est utilisé pour porter le contenant portatif **(4),** la partie centrale **(411)** soit en regard de ladite ouverture; les bras de suspension (412) ayant pour fonction de maintenir le contenant portatif (4) ouvert
- au moins un capteur de mouvement **(418),** configuré pour capter, lorsque ledit dispositif **(41)** est utilisé pour porter le contenant portatif **(4),** un mouvement à travers l'ouverture du contenant portatif **(4);**
- au moins un capteur d'image **(420),** configuré pour capter au moins une image d'une scène couvrant au moins partiellement l'ouverture, lorsque ledit dispositif **(41)** est utilisé pour porter le contenant portatif **(4)** et le capteur de mouvement **(418)** a capté un mouvement à travers ladite ouverture ;
- un capteur de position **(421),** configuré pour déterminer la position actuelle dudit dispositif **(41)** dans le point de vente **(10);** le système comprenant, en outre,
- des moyens de traitement, pourvus d'informations relatives à une liste d'articles **(1)** proposés à la vente par le point de vente **(10)** et configurés pour estimer, avec un indice de confiance prédéfini, un article compris dans ladite au moins une image, cet article étant estimé parmi une liste réduite d'articles comprise dans ladite liste d'articles **(1),** cette liste réduite d'articles **(1)** comprenant les articles de ladite liste d'articles **(1)** dont les localisations dans le point de vente **(10)** se trouvent au voisinage d'une position dudit dispositif **(41)** déterminée par le capteur de position **(421).**

2. Système selon la revendication précédente, **caractérisé en ce que** la liste réduite d'articles **(1)** comprend les articles de ladite liste d'articles **(1)** dont les localisations dans le point de vente se trouvent au voisinage de la position actuelle et/ou d'une position antérieure du dispositif **(41)** d'assistance à l'achat.

3. Système selon la revendication 1 ou 2, **caractérisé en ce que** la partie centrale **(411)** du dispositif **(41)** d'assistance à l'achat comprend un capteur d'image **(420).**

4. Système selon l'une quelconque des revendications précédentes, **caractérisé en ce que** le dispositif **(41)** d'assistance à l'achat comprend, en outre, un capteur de poids **(419)** configuré pour mesurer, lorsque le dispositif **(41)** est utilisé pour porter le contenant portatif **(4),** une variation dans le poids du contenant portatif **(4),** les moyens de traitement utilisant, en outre, cette variation pour estimer ledit article **(1)** compris dans ladite au moins une image.

5. Système selon l'une quelconque des revendications précédentes, **caractérisé en ce que** le dispositif **(41)** d'assistance à l'achat comprend, en outre, au moins un capteur de distance **(424)** configuré pour mesurer sans contact, lorsque le dispositif **(41)** est utilisé pour porter le contenant portatif **(4),** une distance entre ce capteur de distance **(424)** et un article **(1)** compris au moins partiellement dans le champ de mesure de ce capteur de distance **(424).**

6. Système selon l'une quelconque des revendications précédentes, **caractérisé en ce que** les bras de suspension comprennent des moyens de rétention **(414)** destinés à maintenir ce contenant portatif **(4)** ouvert, lorsque ledit dispositif **(41)** est utilisé pour porter le contenant portatif **(4).**

7. Système selon la revendication précédente, **caractérisé en ce que** les moyens de rétention **(414)** comprennent un capteur de contact **(421)** configuré pour capter l'utilisation dudit dispositif **(41)** pour porter un contenant portatif **(4).**

8. Système selon l'une quelconque des revendications précédentes, **caractérisé en ce que** le dispositif **(41)** comprend, en outre, un lecteur de carte configuré pour lire depuis une carte physique ou virtuelle un identifiant client, les moyens de traitement étant configurés pour associer ledit dispositif **(41)** audit identifient client.

9. Ensemble comprenant un contenant portatif **(4)** et le système selon l'une quelconque des revendications précédentes.

10. Ensemble selon la revendication précédente, **caractérisé en ce que** le contenant portatif **(4)** est en matière déformable.

## Patentansprüche

1. System, umfassend eine Vorrichtung (41) zur Einkaufsunterstützung für einen Kunden (3) an einer Selbstbedienungsverkaufsstelle (10), wobei diese Vorrichtung Folgendes umfasst:
- Ein zentrales Teil (411);
- einen mit dem zentralen Teil (411) verbundenen Griff (413);
- Aufhängungsarme (412), die mit dem zentralen Teil verbunden sind und sich auf beiden Seiten des zentralen Teils (411) erstrecken, wobei diese Aufhängungsarme (412) dazu bestimmt sind, mit einem tragbaren Behälter (4) verbunden zu werden, der mit einer Öffnung versehen ist, die es ermöglicht, einen an der Verkaufsstelle (10) zum Verkauf angebotenen Artikel (1) in diesen tragbaren Behälter zu legen, so dass es ermöglicht wird, diesen tragbaren Behälter (41) mittels der Vorrichtung (41) zu tragen, und wobei das zentrale Teil (411) der Öffnung zugewandt ist, wenn die Vorrichtung (41) zum Tragen des tragbaren Behälters (4) verwendet wird, wobei die Aufhängungsarme (412) die Funktion aufweisen, den tragbaren Behälter (4) geöffnet zu halten;
- mindestens einen Bewegungssensor (418), der dazu konfiguriert ist, eine Bewegung durch die Öffnung des tragbaren Behälters (4) zu erfassen, wenn die Vorrichtung (41) zum Tragen des tragbaren Behälters (4) verwendet wird;
- mindestens einen Bildsensor (420), der dazu konfiguriert ist, mindestens ein Bild einer Szene zu erfassen, die die Öffnung zumindest teilweise abdeckt, wenn die Vorrichtung (41) zum Tragen des tragbaren Behälters (4) verwendet wird und der Bewegungssensor (418) eine Bewegung durch die Öffnung erfasst hat;
- einen Positionssensor (421), der dazu konfiguriert ist, die aktuelle Position der Vorrichtung (41) in der Verkaufsstelle (10) festzustellen;
wobei das System ferner Folgendes umfasst:
- Verarbeitungsmittel, die mit Informationen über eine Liste von Artikeln (1), die von der Verkaufsstelle (10) zum Verkauf angeboten werden, versehen und dazu konfiguriert sind, mit einem vordefinierten Konfidenzindex einen Artikel zu erkennen, der in dem mindestens einen Bild enthalten ist, wobei dieser Artikel aus einer reduzierten Liste von Artikeln erkannt wird, die in der Liste von Artikeln (1) enthalten sind, wobei diese reduzierte Liste von Artikeln (1) die Artikel der Liste von Artikeln (1) umfasst, deren Standorte in der Verkaufsstelle (10) in der Nähe einer durch den Positionssensor (421) festgestellten Position der Vorrichtung (41) liegen.

2. System nach dem vorhergehenden Anspruch, **dadurch gekennzeichnet, dass** die reduzierte Liste von Artikeln (1) die Artikel dieser Liste von Artikeln (1) umfasst, deren Standorte in der Verkaufsstelle in der Nähe der aktuellen Position und/oder einer vorherigen Position der Vorrichtung (41) zur Einkaufsunterstützung liegen.

3. System nach Anspruch 1 oder 2, **dadurch gekennzeichnet, dass** das zentrale Teil (411) der Vorrichtung (41) zur Einkaufsunterstützung einen Bildsensor (420) umfasst.

4. System nach einem der vorhergehenden Ansprüche, **dadurch gekennzeichnet, dass** die Vorrichtung (41) zur Einkaufsunterstützung ferner einen Gewichtssensor (419) umfasst, der dazu konfiguriert ist, eine Gewichtsschwankung des tragbaren Behälters (4) zu messen, wenn die Vorrichtung (41) zum Tragen des tragbaren Behälters (4) verwendet wird, wobei die Verarbeitungsmittel, die ferner diese Schwankung zum Erkennen des Artikels (1) verwenden, der in dem mindestens einen Bild enthalten ist.

5. System nach einem der vorhergehenden Ansprüche, **dadurch gekennzeichnet, dass** die Vorrichtung (41) zur Einkaufsunterstützung ferner mindestens einen Abstandssensor (424) umfasst, der dazu konfiguriert ist, einen Abstand zwischen diesem Abstandssensor (424) und einem Artikel (1), der zumindest teilweise im Messfeld dieses Abstandssensors (424) enthalten ist, berührungslos zu messen, wenn die Vorrichtung (41) zum Tragen des tragbaren Behälters (4) verwendet wird.

6. System nach einem der vorhergehenden Ansprüche, **dadurch gekennzeichnet, dass** die Aufhängungsarme Haltemittel (414) umfassen, die dazu bestimmt sind, diesen tragbaren Behälter (4) geöffnet zu halten, wenn die Vorrichtung (41) zum Tragen des tragbaren Behälters (4) verwendet wird.

7. System nach dem vorhergehenden Anspruch, **dadurch gekennzeichnet, dass** die Haltemittel (414) einen Kontaktsensor (421) umfassen, der dazu konfiguriert ist, die Verwendung der Vorrichtung (41) zu erfassen, um einen tragbaren Behälter (4) zu tragen.

8. System nach einem der vorangehenden Ansprüche, **dadurch gekennzeichnet, dass** die Vorrichtung (41) ferner ein Kartenlesegerät umfasst, das dazu konfiguriert ist, eine Kundenkennung von einer physischen oder virtuellen Karte zu lesen, wobei die Verarbeitungsmittel dazu konfiguriert sind, die Vorrichtung (41) mit der Kundenkennung zu verknüpfen.

9. Anordnung, umfassend einen tragbaren Behälter (4) und das System nach einem der vorhergehenden Ansprüche.

10. Anordnung nach dem vorhergehenden Anspruch, **dadurch gekennzeichnet, dass** der tragbare Behälter (4) aus einem verformbaren Material besteht.

## Claims

1. A system comprising a device **(41)** for assisting a purchase by a customer **(3)** at a self-service retail point of sale **(10),** said device including:
- a central portion **(411),**
- a handle **(413)** that is linked to the central portion **(411);**
- suspension arms **(412)** which are connected to the central portion and extend on either side of the central portion **(411),** said suspension arms **(412)** being intended to be connected to a portable container **(4)** provided with an opening enabling an item **(1)** offered for sale at the point of sale **(10)** to be placed in this portable container so as to allow said portable container **(41)** to be carried by the device **(41),** the central portion **(411)** facing said opening when said device **(41)** is being used to carry the portable container **(4),** the suspension arms **(412)** being designed to hold the portable container **(4)** open;
- at least one movement sensor **(418)** which is configured to detect a movement through the opening of the portable container **(4),** when said device **(41)** is being used to carry the portable container **(4),**
- at least one image sensor **(420)** which is configured to detect at least one image of a scene at least partially covering the opening, when said device **(41)** is being used to carry the portable container **(4)** and the movement sensor **(418)** has detected a movement through said opening,
- a position sensor **(421)** which is configured to determine the current position of said device **(41)** in the point of sale **(10),**
the system also including:
- processing means provided with information on a list of items **(1)** offered for sale at the point of sale **(10)** and that are configured to recognize, with a predetermined confidence level, an item appearing in said at least one image, this item being recognized from a reduced list of items included in said list of items **(1),** this reduced list of items **(1)** comprising the items of said list of items **(1)** whose locations in the point of sale **(10)** are close to a position of said device **(41)** determined by the position sensor **(421)** .

2. The system as claimed in the preceding claim, **characterized in that** the reduced list of items **(1)** comprises the items of said list of items **(1)** whose locations in the point of sale are close to the current position and/or to a previous position of the purchase assistance device **(41).**

3. The system as claimed in claim **1** or **2, characterized in that** the central portion **(411)** of the purchase assistance device **(41)** includes an image sensor **(420).**

4. The system as claimed in any one of the preceding claims, **characterized in that** the purchase assistance device **(41)** also includes a weight sensor **(419)** that is configured to measure a variation in the weight of the portable container **(4)** when the device (41) is being used to carry the portable container **(4),** the processing means also using this variation to recognize said item **(1)** appearing in said at least one image.

5. The system as claimed in any one of the preceding claims, **characterized in that** the purchase assistance device **(41)** also includes at least one distance sensor **(424)** that is configured to measure a distance between said distance sensor **(424)** and an item **(1)** at least partially within the measurement field of said distance sensor **(424),** contactlessly and when the device **(41)** is being used to carry the portable container **(4).**

6. The system as claimed in any one of the preceding claims, **characterized in that** the suspension arms include retaining means **(414)** that are designed to hold this portable container **(4)** open when said device **(41)** is being used to carry the portable container **(4).**

7. The system as claimed in the preceding claim, **characterized in that** the retaining means **(414)** include a contact sensor **(421)** that is configured to detect the use of said device **(41)** to carry a portable container **(4).**

8. The system as claimed in any one of the preceding claims, **characterized in that** the device **(41)** also includes a card reader that is configured to read a customer identifier from a physical or virtual card, the processing means being configured to associate said device (41) with said customer identifier.

9. An assembly including a portable container **(4)** and the system as claimed in any one of the preceding claims.

10. The assembly as claimed in the preceding claim, **characterized in that** the portable container (4) is made of deformable material.
